**Europäisches Patentamt**

**European Patent Office**

**Office européen des brevets**

(11) Veröffentlichungsnummer: **0 289 655**
**A2**

# EUROPÄISCHE PATENTANMELDUNG

(21) Anmeldenummer: 87116626.0

(22) Anmeldetag: **11.11.87**

(51) Int. Cl.⁴ **B60S 1/32**

(30) Priorität: 02.05.87 DE 3714650

(43) Veröffentlichungstag der Anmeldung:
**09.11.88 Patentblatt 88/45**

(84) Benannte Vertragsstaaten:
**ES FR GB IT**

(71) Anmelder: **SWF Auto-Electric GmbH**
**Stuttgarter Strasse 119 Postfach 135**
**D-7120 Bietigheim-Bissingen(DE)**

(72) Erfinder: **Edele, Reinhard**
**Albert-Schweitzer-Strasse 16**
**D-7120 Bietigheim-Bissingen(DE)**
Erfinder: **Schmid, Eckhardt**
**Heilbronner Strasse 62**
**D-7129 Brackenheim(DE)**

(54) **Wischarm, insbesondere für Scheibenwischeranlagen an Kraftfahrzeugen.**

(57) Die Erfindung betrifft einen Wischarm mit einem Befestigungsteil, nahe dessen vorderem Ende ein Gelenkteil um eine Gelenkachse schwenkbar angelenkt ist. Das Gelenkteil kann mittels eines Gesperrs, das im Bereich des Befestigungsteils hinter der Gelenkachse vorgesehen ist, in einer Abklappstellung gehalten werden, in der die Wirkungslinie der Wischarm-Anpreßdruckfeder diesseits von deren Totpunktlinie gegenüber der Gelenkachse verläuft. Die gewählte Anordnung des Gesperrs hat den Vorteil, daß bauräumliche Einengungen des Wischarms im Gelenkteilbereich keine Rolle spielen und eine kompakte Wischarmbauweise eingehalten werden kann. Dabei wird für den Wischarm eine Wischstange vorgeschlagen, die verschiedene Funktionen wie Federeinhängung, Wischblattführung und Gelenkteilbefestigung erfüllen kann und die im Übergangsbereich zum Gelenkteil absatzlos daran angrenzt.

Fig. 1

## Wischarm, insbesondere für Scheibenwischeranlagen an Kraftfahrzeugen

Die Erfindung betrifft einen Wischarm, insbesondere für Scheibenwischeranlagen an Kraftfahrzeugen, welcher die im Oberbegriff des Anspruchs 1 aufgeführten Merkmale aufweist.

Bei derartigen Wischarmen kann wegen des Vorhandenseins eines Gesperres eine Abklappstellung des Gelenkteils realisiert werden, bei welcher die Federwirkungslinie der Anpreßdruckfeder diesseits von deren Totpunktlinie gegenüber der Gelenkachse zwischen Befestigungsteil und Gelenkteil, d.h. also in einer Lage liegt, in welcher die Anpreßdruckfeder in die gleiche Richtung wie in der Betriebsstellung, lediglich in der Kraft vermindert, wirkt. Eine stabile Abklappstellung ist somit auch bei kleinem Abklappwinkel realisierbar. Dies ist insbesondere gewünscht bzw. erforderlich, wenn der Wischarm teilweise durch Karosserieteile abgedeckt ist. Als Gesperr wurde bisher eine Konstruktion mit einer Stütze vorgeschlagen, die z. B. die Form eines U-Bügels haben kann und die am Befestigungsteil schwenkbar gelagert ist und zwischen die in das Gelenkteil hineinragende Wischstange und ein Klemmteil greift. Eines dieser Teile, die Wischstange oder das Klemmteil besitzt eine Rastnase, über die der U-Bügel beim Abklappen des Gelenkteils und der Wischstange springt, indem die Wischstange oder das Gelenkteil ausfedern. Dazu war die Schwenkachse des U-Bügels am Befestigungsteil so gelegt worden, daß der Kreis, auf dem sich der zwischen die Wischstange und das Klemmteil greifende Abschnitt des U-Bügels beim Abklappen der Baueinheit bewegt, den Kreis, den dabei die Rastnase beschreibt und dessen Mittelpunkt auf der Gelenkachse zwischem dem Gelenkteil und dem Befestigungsteil liegt, innerhalb des Abklappwinkels schnitt. Dabei ist vorgeschlagen worden, als federndes Teil, das die Rastkraft erzeugt, die Wischstange in der gesamten Länge ihres von dem Befestigungsteil zwischen ihr und dem Gelenkteil in das Gelenkteil hineinragenden Abschnitts zu verwenden. Als Klemmteil sollte das Gelenkteil verwendet werden. Es hat sich jedoch herausgestellt, daß dann die Rastfeder nicht genügt, um das Gelenkteil diesseits der Totpunktlinie der Anpreßdruckfeder sicher zu arretieren.

Deswegen ist in der DE-PS 34 33 106 vorgeschlagen worden, das Klemmteil als separates Teil auszubilden, zwischen dem in das Gelenkteil hineinragenden Wischstangenabschnitt und dem Gelenkteil anzuordnen und an der Wischstange zu befestigen. Eine solche Ausbildung bedingt aber ein großes Platzangebot im Inneren des Gelenkteils bzw. eine hohe Bauweise des Glenkteils, was nicht immer gegeben bzw. erwünscht ist.

Aufgabe der Erfindung ist es, einen Wischarm der eingangs genannten Art so weiterzuentwickeln, daß diesseits der Totpunktlinie der Anpreßdruckfeder eine sichere Arretierung des Glenkteils gegenüber dem Befestigungsteil in der Abklappstellung bei einer möglichst vorteilhaften Bauweise des Wischarms, insbesondere von dessen aus Gelenkteil und Wischstange bestehender Baueinheit, möglich ist.

Diese Aufgabe wird erfindungsgemäß mit einem Wischarm gelöst, welcher gemäß dem Kennzeichen des Anspruchs 1 ausgebildet ist. Vor der Gelenkachse zwischen Befestigungsteil und Gelenkteil möglicherweise bestehende bauräumliche Einengungen beim Wischarm spielen hier keine Rolle; es kann eine kompakte Wischarmbauweise eingehalten werden. Die Verwendung eines großen federnden Wischstangen-oder Gelenkteilabschnitts und sogar überhaupt eines solchen federnden Baueinheitsabschnitts für das Gesperr ist hier vermeidbar. Am Befestigungsteil kann problemlos ein Sperrglied befestigt werden.

Vorteilhafte konstruktive Ausgestaltungen sind in den übrigen Ansprüchen aufgezeigt.

Wenn das Gesperr, wie in Anspruch 2 vorgeschlagen, im Bereich der Oberseite des Befestigungsteils vorgesehen ist, ist es gut zugänglich und kann problemlos wie in Anspruch 9 vorgeschlagen, mittels einer an sich bekannten Abdeckkappe abgedeckt werden.

Ein einfaches und vorteilhaft rastend wirkendes Gesperr ist in Anspruch 3 aufgezeigt.

In den Asprüchen 4 und 5 sind vorteilhafte Ausgestaltungen und sichere Befestigungsmöglichkeiten der Rastfeder aufgezeigt.

Durch die in Asnpruch 6 vorgeschlagene Maßnahme wird erreicht, daß der mit der Rastfeder zusammenwirkende Fortsatz immer den gleichen Abstand zur Gelenkachse besitzt. Prinzipiell kann dabei der Fortsatz einstückig am Gelenkteil angeformt sein. Da herkömmliche Wischarme jedoch an ihrem der Gelenkachse fernen, vorderen Ende mit einer Wischstange verbunden sind, die mit einem Abschnitt in das Gelenkteil hineinragt, ist auf eine einfache Weise eine sichere gelenkteilseitige Führung des Fortsatzes durch die in Anspruch 7 aufgezeigte Maßnahme möglich. Ebenso ist es möglich und vorteilhaft, wenn man den Fortsatz gemäß Anspruch 8 einstückig mit der Wischstange ausbildet.

Wischstangen werden üblicherweise aus Runddraht zu einem flachen Band gewalzt und dieses Stahlband dann in weiteren Arbeitsgängen entsprechend der gewünschten Form gebogen. Außerdem werden sie meist durch Stanzen mit einem Einhängeloch für eine Anpreßdruckfeder versehen. Wenn der Wischarm mehrere Anpreßdruckfedern besitzen soll, wird üblicherweise an der Wischstange ein Bauteil befestigt, das Einhängehaken oder dergleichen für die Anpreßdruckfedern besitzt. Die Wischstangenfertigung ist somit relativ aufwendig. Deswegen werden zur einfacheren Gestaltung des erfindungsgemäßen Wischarms die in den Ansprüchen 10 bis 12 aufgeführten Maßnahmen vorgeschlagen. Es wird darauf hingewiesen, daß für diese Maßnahmen unabhängiger Schutz beansprucht wird, da sie auch bei Wischarmen ohne erfindungsgemäßes Gesperr vorteilhaft sind.

Die in den Ansprüchen 10 und 11 vorgeschlagenen Maßnahmen bilden auch die Grundlage dafür, daß die Wischstange preiswert derart weitergebildet werden kann, daß sie weitere verschiedene Funktionen erfüllen kann, die in den nachfolgenden Anspruchen aufgeführt sind.

Die in Anspruch 13 vorgeschlagene Maßnahme ist für Wischarme vorteilhaft, die an sogenannten Hubwischeranlagen Verwendung finden sollen.

Die Weiterbildung der Wischstange mit Verstärkungsrippen gemäß Anspruch 14 trägt zu deren besseren mechanischen Stabilität bei, so daß sie auch für große Scheibenwischeranlagen problemlos verwendet werden kann.

Wenn der Wischarm dabei ein zuvor vorgeschlagenes, zur Verrastung in der Abklappstellung dienendes Bauteil besitzt, was zwischen Wischstange und Gelenkteil eingeklemmt sein soll, wird die in Anspruch 15 vorgeschlagene Weiterbildung der Wischstange empfohlen. Diese gewährleistet eine sichere Führung des Bauteils und eine sichere Abstützung der Wischstange am Gelenkteil mit der gemäß Anspruch 14 weitergebildeten Wischstange.

Seit einiger Zeit werden die Wischstange und das Gelenkteil eines Wischarms nicht durch Nieten aneinander befestigt, sondern durch scharfkantige Vorsprünge an der Wischstange, die sich durch Andrücken des Gelenkteils, welches aus einem weicheren Material als die Wischstange besteht, in das Gelenkteil eingraben. Externe Befestigungsmittel entfallen hier somit, was sowohl Preisvorteile als auch Vorteile hinsichtlich des Aussehens des Wischarms gewährleistet. Demgemäß wird in Anspruch 16 eine solche Verbindung zwischen Wischstange und Gelenkteil für den erfindungsgemäßen Wischarm vorgeschlagen.

Die in Anspruch 17 vorgeschlagene Wischarmausbildung gewährleistet zum einen ein sehr vorteilhaftes Aussehen des Wischarms und vermeidet auch eine Verletzungsgefahr von Personen an kantigen Absätzen, die bei herkömmlichen Wischarmen im Übergangsbereich von Gelenkteil und Wischstange vorhanden sind. Es wird darauf hingewiesen, daß für die hier vorgeschlagene Wischarmausbildung unabhängiger Schutz beansprucht wird, da sie auch bei Wischarmen ohne erfindungsgemäßes Gesperr vorteilhaft ist.

Durch die in Anspruch 18 aufgezeigte Maßnahme kann das Aussehen des Wischarms noch weiter verbessert werden.

Weitere vorteilhafte Einzelheiten und Ausgestaltungen der Erfindung sind aus der nachfolgend erläuterten Zeichnung ersichtlich, die ein Ausführungsbeispiel zeigt. Dabei ist dargestellt in

Fig.1 ein Längsschnitt durch den Wischarm, wobei Gelenkteil und Wischstange sowohl in Betriebsstellung als auch in Abklappstellung dargestellt sind, in

Fig. 2 der Wischarm in Ansicht von unten, in

Fig. 3 die Wischstange des Wischarms in Seitenansicht, in

Fig. 4 die Wischstange des Wischarms in Ansicht von unten, in

Fig. 5 ein Schnitt entlang der Linie V - V in Fig. 3 und in

Fig. 6 ein Schnitt entlang der Linie VI - VI in Fig. 1.

Der Wischarm soll an einem Kraftfahrzeug mit Hubwischeranlage verwendet werden. Sein Befestigungsteil 10 ist im wesentlichen blockförmig gestaltet. Es kann in axialer Richtung auf den Kolben eines Kurbelgetriebes aufgeschoben und mit einer Schraube und einer dazugehörigen Mutter 9 daran festgeklemmt werden.

Nahe des vorderen Endes 11 des Befestigungsteils 10 ist in eine als Gelenkniet 12 ausgebildete, sich quer zur Wischarmlängsrichtung erstreckende Gelenkachse vorgesehen, um die das Gelenkteil 13 des Wischarms schwenkbar am Befestigungsteil 10 angelenkt ist. Das Gelenkteil 13 ist im wesentlichen U-förmig aus einem Blech aus Federbandstahl gestaltet und weist zwei durch einen Steg 14 verbundene Seitenwangen 15 auf. Der Gelenkniet 12 durchdringt die beiden das Befestigungsteil 10 teilweise übergreifenden Seitenwangen 15 des Gelenkteils 13.

Mit dem vorderen Ende 16 des Gelenkteils 13 ist eine Wischstange 17 verbunden, an deren freiem, hakenförmigem Ende 18 ein Wischblatt befestigbar ist. Die Wischstange 17 ist aus einer Aluminium-Siliciumlegierung druckgegossen. In dem Bereich 19, wo sie mit dem vorderen Ende 16 des Gelenkteils 13 verbunden ist, ist sie im Querschnitt im wesentlichen rechteckförmig gestaltet und mit scharfkantigen Vorsprüngen, die als Zähne 20 ausgebildet sind, versehen, die von den Längsseitenflächen 21 und von der unteren Längsfläche 22 der Wischstange 17 abstehen. Weiterhin ist sie in diesem Bereich 19 mit einer Verstärkungsrippe 23 gestaltet, die sich mittig entlang der unteren Längsfläche 22 erstreckt. Sie besitzt demgemäß hier im Querschnitt genau ein T-förmiges Aussehen, wie Fig. 6 zeigt. Das vordere Ende 16 des Gelenkteils 13 ist um diesen Bereich derart umgeschlagen, daß sich die Zähne 20 in die Innenfläche seines Steges 14 und in die Innenflächen seiner Seitenwangen 15 eingegraben haben. Dabei ist es derart umgeschlagen, daß es im Querschnitt etwa C-förmig aussieht (vgl. Fig. 6) und mit den Innenflächen 25 seiner Seitenwangen 15 an den Längsseitenflächen 21 der Wischstange 17 und mit der Innenfläche 24 seines Steges 14 an der oberen Längsfläche der Wischstange 17 und mit den einander zugekehrten Flächen 26 der Seitenwangen 15 an den Seitenflächen 27 der Verstärkungsrippe 23 anliegt, die so hoch ist, wie die Seitenwangen 15 dick sind. Somit sind das Gelenkteil 13 und die Wischstange 17 formschlüssig, sicher und formschön miteinander verbunden.

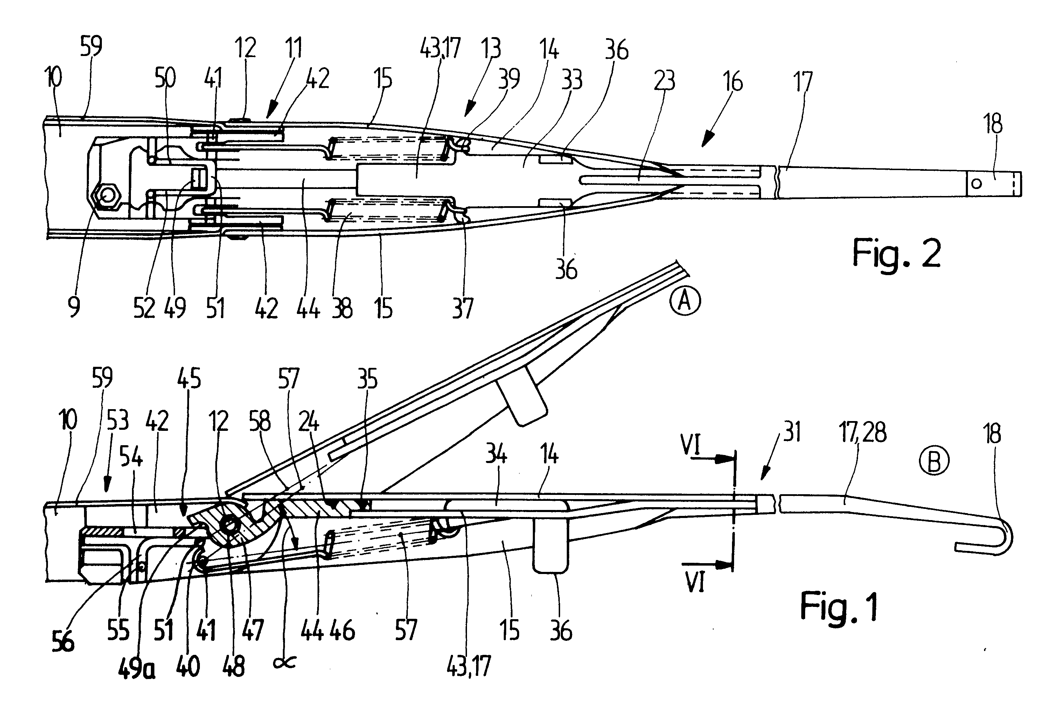

An ihrem unmittelbar vor dem vorderen Ende 16 des Gelenkteils 13 verlaufenden Abschnitt 28 ist die Wischstange 17 im Querschnitt vergrößert und etwa trapezförmig, jedoch mit abgerundeten Kanten gestaltet. Die Querschnittsvergrößerung 30 ist dabei so groß wie die Seitenwangen 15 des Gelenkteils 13 dick sind. Im Übergangsbereich von Gelenkteil 13 und Wischstange 17 gibt es somit keine Absätze (vgl. Fig. 1). Das trägt ebenfalls zur formschönen und sicheren Bauweise des Wischarms bei. Zum Hakenende 18 hin vermindert sich dabei der Wischstangenquerschnitt kontinuierlich und zur Rechteckform, so daß an ihm das Wischblatt auf herkömmliche Weise befestigt werden kann.

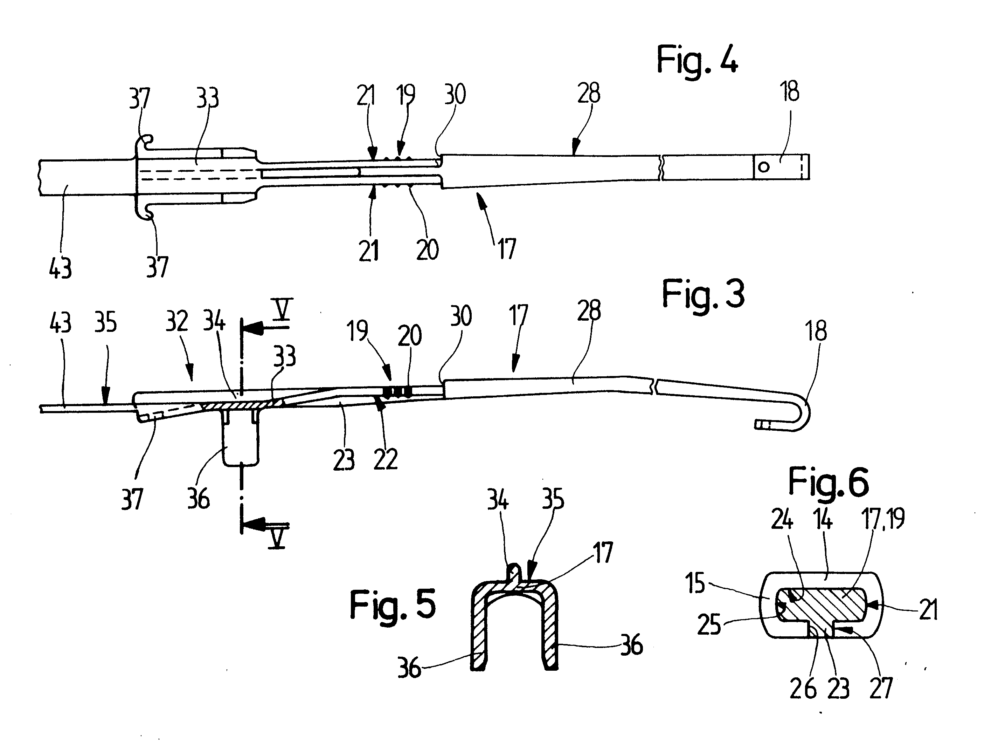

Die Wischstange 17 ragt mit ihrem hinter der von den Zähnen 20 gebildeten Verbindungsstelle mit einem nach unten abgekröpften Abschnitt 32 in den vom Gelenkteil 12 begrenzten, unten offenen freien Raum hinein. An dem näher bei den Zähnen 20 liegenden Bereich 33 des Abschnitts 32 ist die Wischstange 17 im Querschnitt wiederum T-förmig, aber breiter als zuvor gestaltet und besitzt eine Verstärkungsrippe 34. Diese erstreckt sich hier mittig entlang der oberen Längsfläche 35 der Wischstange 17 (vgl. insbesondere Fig. 5). Mit dieser Verstärkungsrippe 34 stützt sich die Wischstange 17 am Steg 14 des Gelenkteils 13 ab (vgl. Fig. 1).

In dem Bereich 33 ist an der Wischstange 17 beidseitig jeweils ein sich nach unten erstreckender, rechteckiger Lappen 36 angeformt. Diese Lappen 36 bilden eine sogenannte Schwänzelführung für das Wischblatt.

An dem weiter von den Zähnen 20 entfernt liegenden Ende des Bereichs 33 des Abschnitts 32 der Wischstange 17 ist beidseitig jeweils ein Haken 37 einstückig angeformt. An diesen Haken 37 sind jeweils zwei Zugfedern 38, die als Stielösenfedern ausgebildet sind, mit ihren ersten Ösen 39 eingehängt. Andererseits sind die Stielösenfedern 38 mit ihren zweiten Ösen 40 an einem Bolzen 41 eingehängt, welcher sich quer zur Wischarmlängsrichtung zwischen zwei Seitenwänden 42 des Befestigungsteils 10 und hinter und unterhalb dem Gelenkkniet 12 erstreckt. Dabei ist der Bolzen 41 einstückig an die Seitenwände 42 des Befestigungsteils 10 angeformt.

An einem noch weiter von den Zähnen 20 entfernt liegenden Bereich 43 des Abschnitts 32 ist die Wischstange 17 nicht mit einer Verstärkungsrippe versehen. Ihre obere Längsfläche 35 verläuft, wie die Fig. 1 zeigt, auf Abstand zur Innenfläche 24 des Stegs 24 des Gelenkteils 13. Zwischen diese Flächen 24 und 35 ist ein nachfolgend näher beschriebenes Bauteil 44 eingeklemmt, das Teil eines Gesperrs 45 ist, welches das Gelenkteil 13, die Wischstange 17 und das Wischblatt im Bedarfsfall in einer Abklappstellung A halten kann.

Das Bauteil 44 besteht aus einem starren Material. Es verläuft mit einem im Querschnitt rechteckigen Abschnitt 46 bis nahe zum Gelenkkniet 12. Anschließend ist es in einem Bereich 47 im wesentlichen hohlzylindrisch gestaltet. Der Bereich 47 erstreckt sich zwischen den Seitenwangen 42 des Befestigungsteils 10 und bildet eine lagerbuchsenartige Aufnahme für eine Lagerbuchse 48, durch welche der Gelenkkniet 12 verläuft. An den befestigungsteilseitig verlaufenden Abschnitt des Bereichs 47 des Bauteils 44 ist ein sich quer zur Wischarmlängsrichtung verlaufender, wulstartiger Fortsatz 49 einstückig angeformt.

Über den Fortsatz 49 wirkt das Bauteil 44 mit einem zweiten Teil, das als Rastfeder 50 ausgebildet ist, des Gesperrs 45 zusammen. Die Rastfeder 50 ist als ein im wesentlichen U-förmiger Bügel gestaltet. Sir besitzt demgemäß zwei durch eine Krümmung 51 miteinander verbundene U-Schenkel 52. Mit diesen U-Schenkeln 52 und mit der Krümmung 51 verläuft sie entlang der Oberseite 53 des Befestigungsteils 10, und zwar entlang eines gegenüber den Seitenwänden 42 vertieft liegenden Bereichs 54 des Befestigungsteils 10. Im Bereich der Krümmung 51 und an einem sich daran anschließenden, etwa über ein Drittel der Schenkellänge erstreckenden Abschnitt der U-Schenkel 52 steht die Rastfeder 50 frei. Sie kann hier demgemäß in Richtung der Höhenerstreckung des Befestigungsteils 10 ausfedern. An die Enden 55 sind die U-Schenkel 52 der Rastfeder 50 geschweift und in Nuten 56 geführt, welche in Richtung der Höhenerstreckung des Befestigungsteils 10 verlaufen.

Quer zur Wischarmlängsrichtung erstreckt sich eine im Querschnitt halbkreisförmige Aussparung 49a im Angrenzungsbereich zwischen dem Fortsatz 49 und dem Bereich 47 des Bauteils 44, welche maßlich auf die Krümmung 51 der Rastfeder 50 abgestimmt ist. Die Lage der Aussparung 49a ist dabei derart gewählt, daß er beim Drehen des Gelenkteils 13 von der Betriebsstellung B im Gegenuhrzeigersinn in die Abklappstellung A bei einem Abklappwinkel α von etwa 28 Grad die Krümmung 51 von oben umgreift und somit das Bauteil 44 mit der Rastfeder 50 eine Rastverbindung eingeht. Die Wirkungslinien 57 der Zugfedern 38 verlaufen demgemäß in der Abklappstellung diesseits der Totpunktlinie 58 der Federn 38 gegunüber der Gelenkachse 12. Wegen des zuvor beschriebenen Gesperrs 45 ist die Abklappstellung A aber stabil.

Um das Gelenkteil 13 wieder in die Betriebsstellung 13 zu bringen, braucht lediglich manueller Druck im Uhrzeigersinn auf das Gelenkteil 13 oder die Wischstange 17 ausgeübt zu werden. Die Rastfeder 50 wird dabei an ihrem freistehenden bzw. ihren bereichsweise freistehenden Bereich(en) 51, 52 von dem hohlzylindrischen Bereich 47 des mit dem Gelenkteil 13 schwenkbaren Bauteils 44 nach unten gedrückt, wodurch der Fortsatz 49 freigegeben wird, so daß das Gelenkteil 13, durch die Wirkung der Zugfedern 38 unterstützt, in die Betriebsstellung B kommt. Ein zu frühes versehentliches Loslassen des Gelenkteils 13 schadet dabei nicht, da es selbst in der Abklappstellung A nicht weit von der Scheibe entfernt ist und demgemäß weder die Wischstange 17 noch das Wischblatt mit großer Wucht auf die Scheibe aufprallen können.

Ein besonderer Vorteil des Gesperrs 45 ist weiterhin, da es aufgrund seiner zuvor beschriebenen Anordnung und Ausbildung im Gelenkteil 13 nur einen sowieso vorhandenen Raum benötigt. Bauräumliche Einengungen im Gelenkteilbereich des Wischarms spielen hier keine Rolle, der Wischarm kann somit, wie häufig gewünscht, niedrig gebaut werden.

Wie die Fig. 1 und 2 noch zeigen, ist an dem Gelenkniet 12 eine Abdeckkappe 59 angelenkt, die bis zum hinteren Ende des Befestigungsteils 10 reicht und demgemäß auch das Gesperr 45 abdeckt.

Somit ist der Wischarm ingesamt sowohl sicherheitstechnisch als auch stilistisch besonders vorteilhaft aufgebaut.

**Ansprüche**

1. Wischarm, insbesondere für Scheibenwischeranlagen an Kraftfahrzeugen, mit einem Befestigungsteil, nahe dessen vorderem Ende um eine Gelenkachse schwenkbar ein Gelenkteil angelenkt ist, das in einer Betriebsstellung aufgrund einer von wenigstens einer Anpreßdruckfeder erzeugten Kraft in Richtung der zu reinigenden Scheibe bewegt wird und das in einer Abklappstellung in einer von der Scheibe abgewinkelten Lage mittels eines Gesperrs gehalten werden kann, dadurch gekennzeichnet, daß das Gesperr (45) im Bereich des Befestigungsteils (10) hinter der Gelenkachse (12) vorgesehen ist.

2. Wischarm nach Anspruch 1, dadurch gekennzeichnet, daß das Gesperr (45) im Bereich der sich in Wischarmlängsrichtung erstreckenden Oberseite (53) des Befestigungsteils (10) vorgesehen ist.

3. Wischarm nach Anspruch 1 oder 2, dadurch gekennzeichnet, daß das Gesperr (45) eine am Befestigungsteil (10) gelagerte Rastfeder (50) besitzt, welche mit einem mit dem Gelenkteil (13) - schwenkbaren Fortsatz (49) zusammenwirkt.

4. Wischarm nach Anspruch 2 und 3, dadurch gekennzeichnet, daß die Rastfeder (50) als ein im wesentlichen U-förmiger Bügel ausgebildet ist, der mit den Enden (55) seiner U-Schenkel (52) am Befestigungsteil (10) befestigt ist und wenigstens an der die U-Schenkel (52) verbindenden Krümmung (51) freisteht und daß mit diesem (diesen) freistehenden Rastfederbereich(en) (51, 52) der Fortsatz (49) zusammenwirkt.

5. Wischarm nach Anspruch 4, dadurch gekennzeichnet, daß die Enden (55) der U-Schenkel (52) in Richtung der Höhenerstreckung des Befestigungsteils (10) verlaufen und in darin eingearbeiteten Nuten (56) geführt sind.

6. Wischarm nach einem der Ansprüche 3 bis 5, dadurch gekennzeichnet, daß der Fortsatz (49) an einem die Gelenkachse (12) lagerbuchsenartig umgebenden Bauteil (44) einstückig angeformt ist.

7. Wischarm nach Anspruch 6, dadurch gekennzeichnet, daß das Bauteil (44) gelenkteilseitig zwischen dem Gelenkteil (13) und einem in das Gelenkteil (13) hineinragenden Abschnitt (43) einer Wischstange (17) eingeklemmt ist.

8. Wischarm nach Anspruch 6, dadurch gekennzeichnet, daß das Bauteil einstückig mit einer sich mit einem Abschnitt in Wischarmlängsrichtung durch das Gelenkteil erstreckenden Wischstange gefertigt ist.

9. Wischarm nach einem der vorhergehenden Ansprüche, dadurch gekennzeichnet, daß das Befestigungsteil (10) und das Gesperr (45) von einer Abdeckkappe (59) überdeckt sind.

10. Wischarm, insbesondere nach einem der vorhergehenden Ansprüche, dadurch gekennzeichnet, daß die Wischstange durch Schmieden aus einem schmiedefähigem Material, insbesondere aus Aluminium oder einer Aluminiumlegierung hergestellt ist.

11. Wischarm, insbesondere nach einem der Ansprüche 1 bis 9, dadurch gekennzeichnet, daß die Wischstange (17) durch Guß aus einem gußfähigen Material, insbesondere aus Aluminium oder einer Aluminiumliegung hergestellt ist.

12. Wischarm, insbesondere nach einem der vorhergehenden Ansprüche, dadurch gekennzeichnet, daß die Wischstange (17) an ihrem in das Gelenkteil (13) hineinragenden Abschnitt (19, 32, 33, 43) wenigstens mit einem einstückig angeformten Befestigungsmittel (37) als Lager für eine Anpreßdruckfeder (38) versehen ist.

13. Wischarm nach einem der Ansprüche 10 bis 12, dadurch gekennzeichnet, daß die Wischstange (17) an ihrem in das Gelenkteil (12) hineinragenden Abschnitt (19, 32, 33, 43) mit einstückig angeformten Führungselementen (36) für ein Wischblatt versehen ist.

14. Wischarm nach einem der Ansprüche 10 bis 13, dadurch gekennzeichnet, daß die Wischstange (17) an ihrem in das Gelenkteil (12) hineinragenden Abschnitt (19, 32, 33, 43) im Querschnitt im wesentlichen rechteckförmig, jedoch mit Verstärkungsrippen (23, 34) gestaltet ist.

15. Wischarm nach Anspruch 7 und 14, dadurch gekennzeichnet, daß die Wischstange (17) an ihrem in das Gelenkteil (12) hineinragenden Abschnitt (19, 32, 33, 43) bereichsweise in den vom Gelenkteil (13) begrenzten freien Raum derart abgekröpft ist, daß zwischen ihrer einen sich in Wischarmlängsrichtung erstreckenden Längsfläche (35) und der dieser gegenüberliegenden Fläche (24) des Gelenkteils (14) ein Abschnitt (43) vorliegt, in dem diese Flächen (35, 24) eine der Dicke des Bauteils (44) entsprechenden Abstand voneinander besitzen und daß der Abschnitt (32) länger als das Bauteil (44) ist und dort, wo sich das Bauteil (44) nicht befindet, mit einer sich an der Fläche (24) des Gelenkteils (14) abstützenden Verstärkungsrippe (34) versehen ist.

16. Wischarm nach einem der Ansprüche 7 bis 15, dadurch gekennzeichnet, daß die Wischstange (17) scharfkantige Vorsprünge (20) zum formschlüssigen Festlegen des Gelenkteils (13) aufweist.

17. Wischarm, insbesondere nach einem der vorhergehenden Ansprüche, dadurch gekennzeichnet, daß sein Gelenkteil (13) an seinem dem Befestigungsteil (10) fernen, vorderen Ende (16) im Querschnitt wenigstens annähernd C-förmig mit zwei durch einen Steg (14) verbundenen Seitenwangen (15) ausgebildet ist und mit diesem Ende (16) einen Abschnitt (19) einer Wischstange (17) umgreift, der im Querschnitt wenigstens annähernd T-förmig ausgebildet ist und an der Innenfläche (24) des Steges (14), an den Innenflächen (25) der Seitenwangen (15) sowie an den einander zugekehrten Flächen (26) der Seitenwangen (15) des Gelenkteils (13) anliegt.

18. Wischarm nach Anspruch 17, dadurch gekennzeichnet, daß die Wischstange (17) an ihrem außerhalb des Gelenkteils (13) liegenden Abschnitt (28) einen sich zum freien Ende (18) hin verjüngenden, etwa trapezförmigen Querschnitt aufweist.

Fig. 2

Fig. 1

0 289 655

Fig. 4

Fig. 3

Fig. 5

Fig. 6

0 289 655